# EUROPEAN PATENT APPLICATION

(11) **EP 2 848 501 A1**
(43) Date of publication of application: **18.03.2015**
(21) Application number: 12876304.2
(22) Date of filing: 10.05.2012
(51) Int. Cl.: B62D 49/08

(54) **SAFETY ARM FOR LIGHTWEIGHT FARM VEHICLES**

(71) Applicant: Marzo Quintanilla, Eugenio, 46900 Torrent (ES)
(72) Inventor: Marzo Quintanilla, Eugenio, 46900 Torrent (ES)
(74) Representative: Sanz-Bermell Martinez, Alejandro
(86) International application number: PCT/ES2012/070334
(87) International publication number: WO 2013/167762

(57) **Abstract**

This comprises a mechanism for rotation and telescopic extension which is activated when the vehicle reaches a specific inclination, as well as an articulated foot (21) which comprises a pyrotechnic device (1,3) for its activation, with a firing device (4) which operates an activation switch, a device for retaining the rotation of the arm in inactive position, an inclinometer (15), and a firing trigger. It may optionally have a telescopic roll bar arch with pyrotechnic activation and a system for informing and positioning in the event of an accident.

## Description

This invention refers to a foldable and extendible safety arm operated by pyrotechnic means which acts when the vehicle reaches a certain degree of inclination, preventing or hindering the vehicle from crushing the driver beneath it.

In certain types of crops, particularly, but not exclusively, trees or vines, farm work is done with small-sized agricultural vehicles with a short wheelbase. These vehicles can easily roll over when one of the drive wheels sinks into soft earth, causing an uncontrolled rotation which makes the vehicle tip up, or when there is a slope at the end of the field where this has to turn around.

In this type of work, vehicles carrying a fixed roll bar are not appropriate as such bars constantly hit the branches of the trees, which causes breakages of these branches and loss of the fruit. For this reason vehicles with a fold-down roll bar tend to be used, but in the rest position, that is, placed horizontally without having any safety function. In these circumstances turning over can be fatal, as the whole weight of the vehicle might fall on the driver, causing death in most cases.

As has already been said, roll bars do not solve the problem because they either make the vehicle useless for certain tasks or stand in a position which does not enable it to move under the branches of the trees.

At the present time there is no safety system which prevents the tractor from turning over, as existing systems only restrict the tractor from continuing to tip up as far as possible when it has started to roll.

There have been many known cases in which people have been trapped inside the roll bar itself. Today's raised roll bars mean that the tractor's centre of gravity is higher, thus making the probability of turning over increase; if we add to this the fact that all roll bars on light tractors can be folded down to allow their use in areas with trees (olives, oranges, almonds, etc.), where it is not possible to work with the bar up, and because there tend to be height restrictions in garages and sheds, the result, as is unfortunately confirmed by statistics, is that, after this bar has been folded away, the farmer tends to work for a long time without raising it again, sometimes through confidence or laziness and other times because the average farmer is elderly and the roll bar is too old heavy for them.

### State of the art

ES 2014991 describes a self-triggering anti-roll safety bar for tractors, which is articulated and fitted to the tractor chassis on each of its sides by an anchorage, and which is fixed by the elastic compression of transversal springs and extension springs, with an interlocking pawl which is released when this reaches a certain degree of inclination.

The use of springs nevertheless implies several basic problems:
- Loading the arm against the spring requires a great deal of strength, needing mechanical means specially conceived for this purpose;
- Triggering off the arm by means of springs is a slow matter, which does not guarantee that this can open before completely tipping over;
- The interlocking pawl may also require a great deal of force for its release, which must also be instantaneous with the act of tipping over, and which is not guaranteed in the mechanical system described.

### Description of the invention

This invention consists of a safety device for tractors or light farm vehicles, which comprises a structure for securing to the chassis of the tractor, and an articulated and telescopically extendible arm, which comprises a pyrotechnic device on the inside, associated with an inclinometer, which will trigger this off after a pre-set degree of inclination has been reached. The arm may incorporate an extendible safety bar or be used additionally to the bar already installed on the tractor.

This comprises securing means in its retracted position, with at least one retaining trigger, and means of retaining this in a folded and extended position.

With the invention proposed rollover can be prevented in most cases, which will result in preventing the loss of human lives.

It may optionally have an extendible roll bar, also operated by pyrotechnic means. The two lateral arms which form the roll bar can also be telescopic, and like the lateral arms, comprise means for retaining them in a deployed position. When in a retracted position, the roll bar does not hinder daily work by always being there, although in the event of an accident causing rollover it will also extend automatically, without depending on the driver. As the vehicle tips up, when the point of no-return is reached, the real weight of the tractor is minimal through being in equilibrium. The structure is nevertheless dimensioned so as to ensure sufficient strength to support the weight of the tractor and the corresponding impact. In many cases, through having activated the extension system, the tractor can return to its vertical position, and the tractor can work normally with the roll bar arch extended.

After the safety device of the invention has been activated, a signal will be sent to the engine to make this stop. It is also planned to equip the system with a communication system, such as a mobile phone, which will send a signal or message to a safety centre (in Spain for example, telephone number 112, for emergencies). It is also intended to be equipped with a positioning device, such as a GPS device, which transmits coordinates for fast location, along with the alarm signal.

With the protection system proposed the risk of undergoing an accident is reduced as far as possible.

It is always advisable to wear a safety belt so as to prevent the driver from being thrown from his or her position, thus minimising risks in the event of an accident.

### Brief description of the drawings

In order to illustrate the following explanation, we are adjoining to this descriptive report ten sheets of drawings in which the essence of this invention is represented in eleven figures, as an example, and with no limiting effects, and in which the following points can be observed:

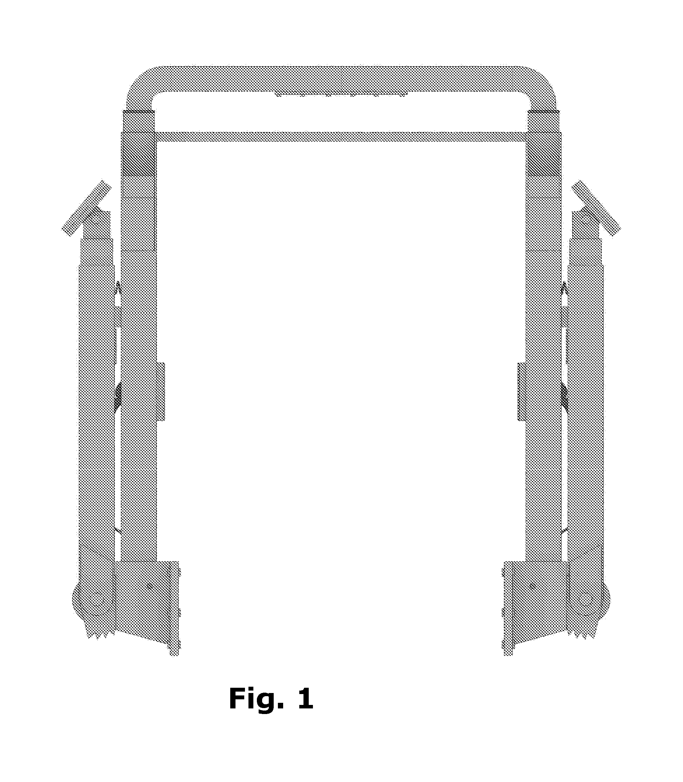

- Figure 1: shows a schematic front view of an example of an embodiment of the safety arm for light agricultural vehicles of the invention combined with the roll bar;

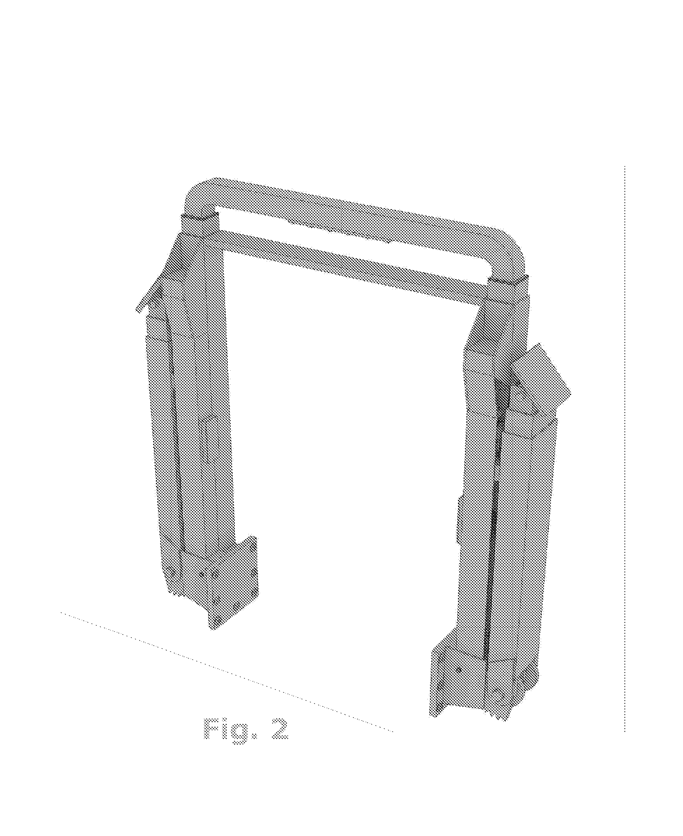

- Figure 2: shows a schematic perspective view of the device of Figure 1 in its inactive position;

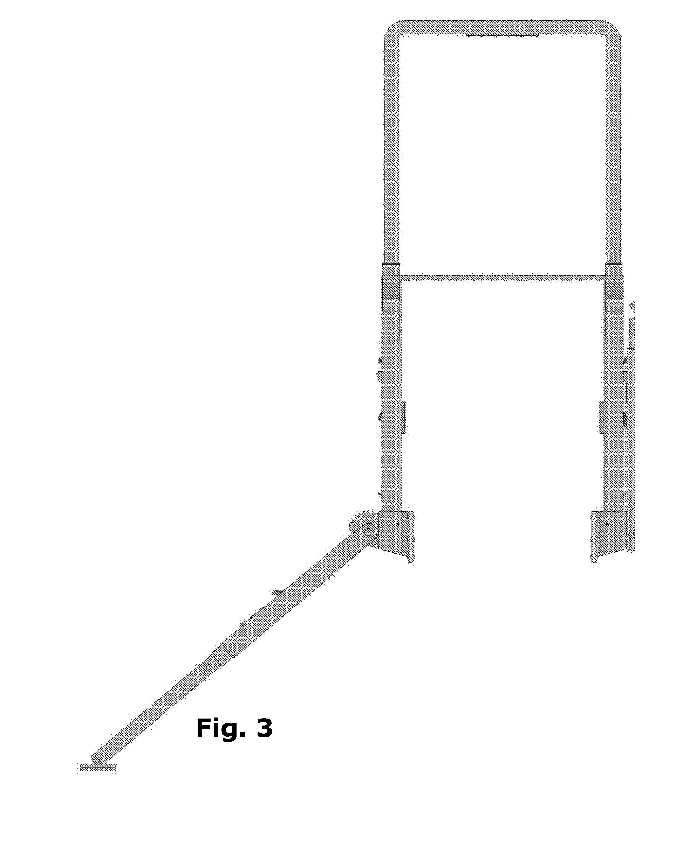

- Figure 3: shows a schematic perspective view of the device of Figures 1 and 2 in the activated position;

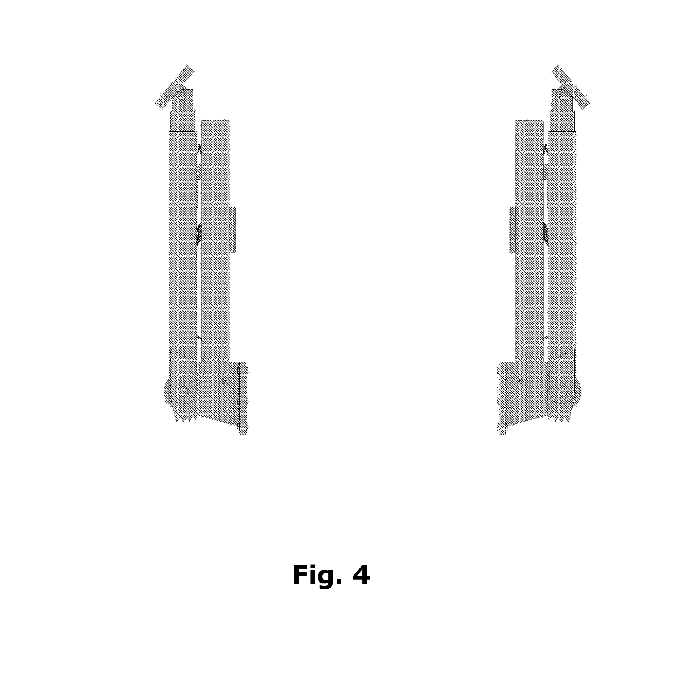

- Figure 4: shows a view of an example of an embodiment in which the arms are not combined with the rollover bar;

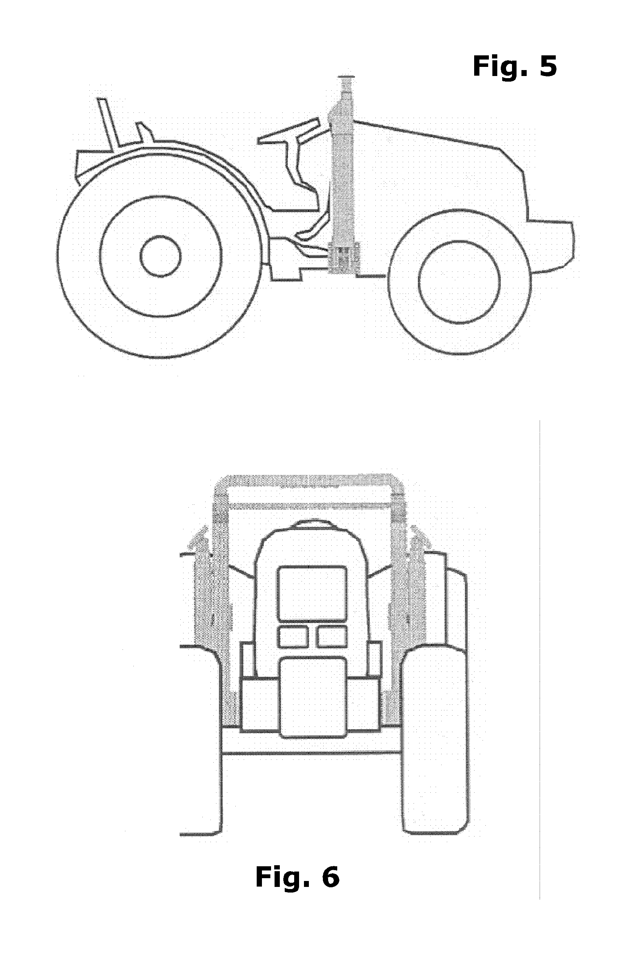

- Figure 5: shows a schematic lateral view of a tractor fitted with the device of Figures 1 to 3;
- Figure 6: shows a schematic front view of the tractor of Figure 5;

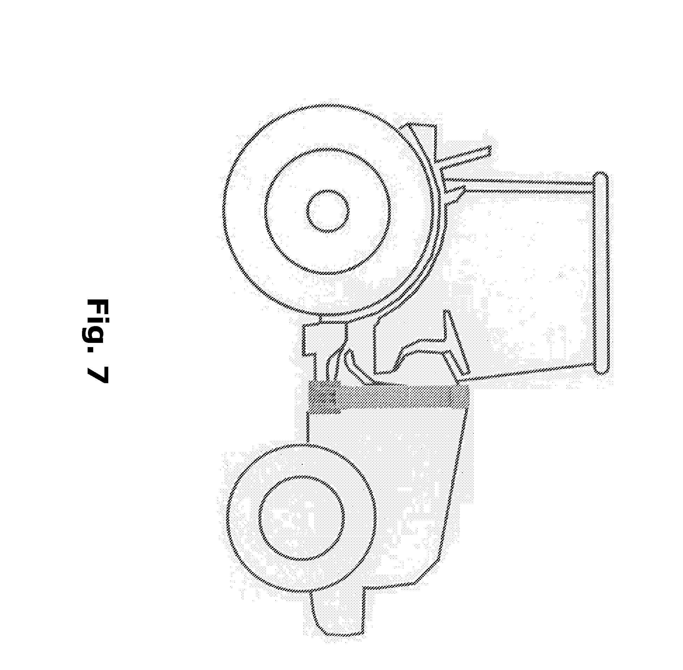

- Figure 7: shows a schematic lateral view of a tractor with the arms of Figure 4;

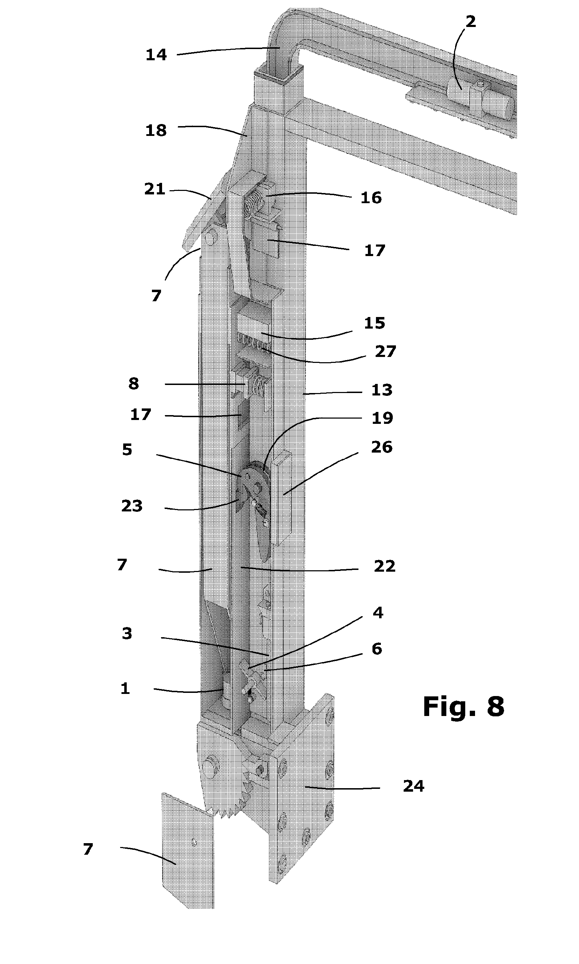

- Figure 8: shows a perspective cross-section view of the arm of the invention with a part of the associated roll bar;

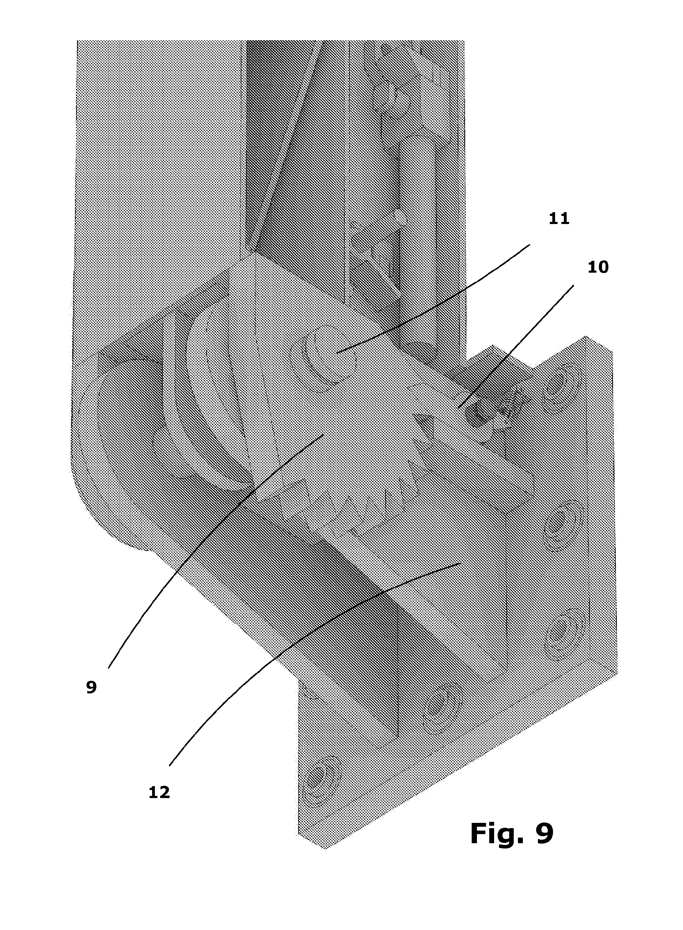

- Figure 9: shows a schematic view of a detail of the anchorage of the arm to the tractor and the retaining device;

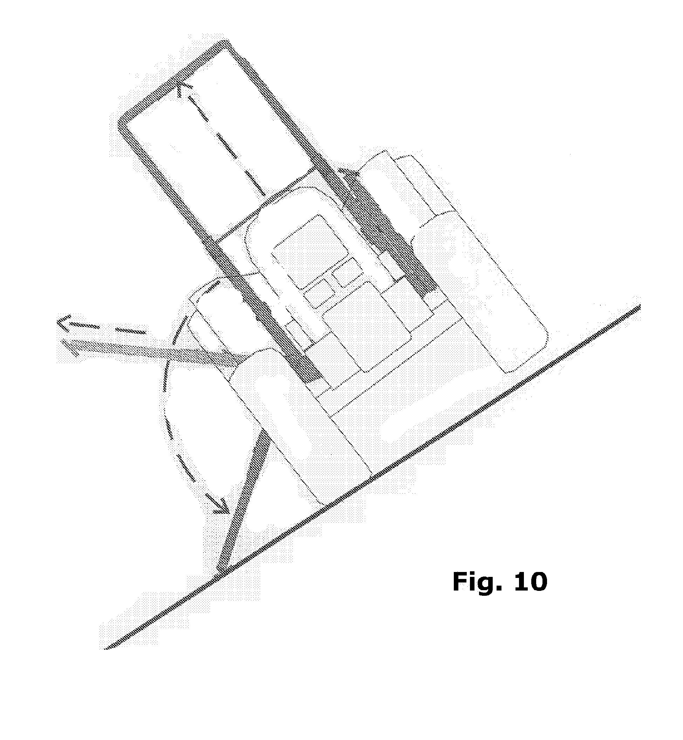

- Figure 10: shows a schematic view of a tractor fitted with the device of the invention in the lateral tipping stage, in which both the arms and the roll bar are activated, and

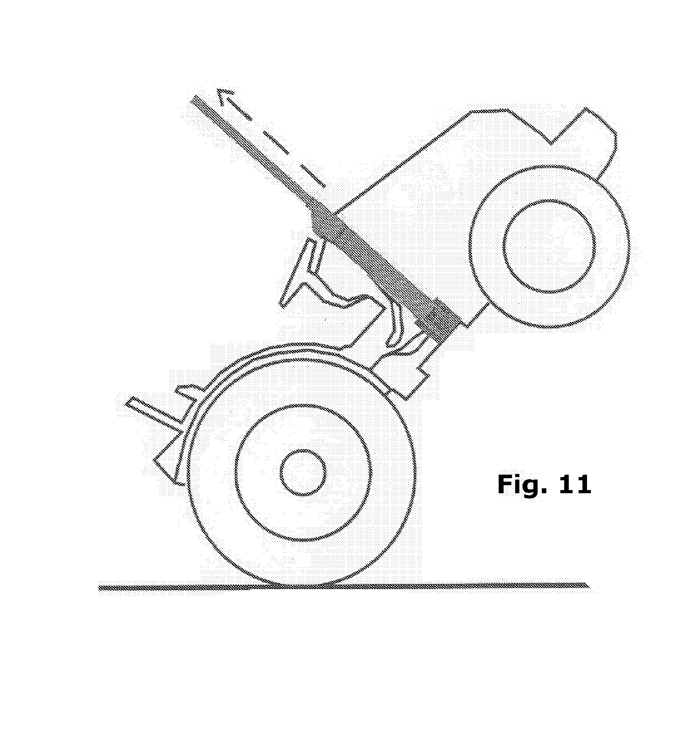

- Figure 11: shows a schematic view of a tractor fitted with the device of the invention in the longitudinal tipping stage, in which the roll bar is activated.

### Description of the preferential forms of embodiment of the invention

This invention consists of a safety device specially designed for light agricultural vehicles, which comprises an arm articulated to the tractor structure, which is provided with at least one pyrotechnic firing device (1,2,3) and which is preferably extendible telescopically or in parallel.

In a first option, the arm comprises an outer body (22) and is also provided with an inner telescopic body in one or more pieces, so that this allows it to extend until reaching the distance required to constitute a support.

When a certain degree of inclination is detected, at least one of the pyrotechnic devices in each of the arms is triggered, so that the pressure acts on a firing action mechanism (4) connected to a firing switch (6). When the pyrotechnic firing trigger (3) is operated a cable (19) is tautened, so that a trigger (5) forming a rocker is pulled by this cable, releasing the catch with a locking pawl fitted in the arm.

Since the arm is telescopic, this has a lock (8), which prevents any unwanted extension of the inner telescopic arm, and which is released when the pyrotechnic device (1) of the arm explodes.

The firing will take place when the vehicle reaches a specific inclination, which is monitored by an inclinometer (15). The arm is thus provided with more than one item, as well as an articulated foot (21).

The arm is fitted with a device for retaining the rotation of the arm in its idle position; the retaining device also has the role of firing trigger.

To prevent any vibrations, which are always annoying, the device for anchoring this to the vehicle comprises a vibration-damping anchorage plate (24), fitted with a rubber gasket. The anchorage zone comprises a support for the arm, which is made up of a ratchet (9) with a toothed part and a locking device (10) on said toothed part, and with a coupling spindle (11) through a support (12) for coupling to the vehicle. When the arm is extended and articulated this will require a specific deliberate action to be able to be released and returned to the retracted position.

The system for retaining the arm in the retracted position is made up of a locking pawl (23) for the device joined to the arm, and a firing trigger (5) fitted with an elastic means which keeps this in the retaining position of the locking pawl (23); the trigger (5) is made up of a rocker articulated on a spindle.

The join between the main body and the arm articulated on this comprises at least one vibration-damping spring (27).

In one option the arm (the pair of arms, one for each side, obviously) also comprises a telescopic roll bar arch, whose extension takes place by means of pyrotechnic operation (2). This comprises a fixed body (13), which may be provided with reinforcements (18) and at least one inner telescopic roll bar arch (14). In this case, as for the articulated arm, there is a locking device (16) of the inner arch which will keep this in the retracted position unless this is released by the detonation of the pyrotechnic device or by manual activation, where applicable.

Both the arch and the arm comprise windows (17) for the controlled outlet of gases, as well as windows (26,20) that can be opened for access to the device for retaining the rotation of the arm in its inactive position and of the pyrotechnic device of the arch respectively.

According to one option of the invention, the vehicle fitted with the arm described above also comprises a device for automatically informing an emergency centre and a geographical positioning device, such as a GPS.

## Claims

1. A safety arm for light agricultural vehicles, which comprises a rotating and telescopically-extending mechanism which is activated when the vehicle reaches a certain inclination, as well as an articulated foot (21) **characterised in that** this comprises the following items:
• At least one activating pyrotechnic device (1,3) with a firing device (4) which operates an activation switch;
• At least one device for retaining the rotation of the arm in its inactive position;
• An inclinometer (15)
• A firing trigger.

2. A safety arm for light agricultural vehicles, according to claim 1, **characterised in that** this also comprises a vibration-damping anchorage plate (24) fitted with a rubber gasket.

3. A safety arm for light agricultural vehicles, according to any of claims 1 to 2, **characterised in that** the retention of the arm in the retracted position is made up of:
• A locking pawl (23) for the device;
• A firing trigger (5) fitted with an elastic means which keeps this in the position for retaining the locking pawl (23) made up of a rocker articulated on a spindle;
• A lock (8) for the inner telescopic arm (7);
• At least one vibration-damping spring (27).

4. A safety arm for light agricultural vehicles, according to any of claims 1 to 3, **characterised in that** the means for retaining the arm in the retracted position comprises a ratchet (9) with a toothed part and a locking device (10) on said toothed part, and with a coupling spindle (11) through a coupling support (12) to the vehicle.

5. A safety arm for light agricultural vehicles, according to any of claims 1 to 4, **characterised in that** the firing trigger (5) is fitted with a pyrotechnic activation means (3), with a pulling cable for the release of the catch between the trigger (5) and the pawl of claim 3.

6. A safety arm for light agricultural vehicles, according to any of claims 1 to 5, **characterised in that** this also comprises a telescopic roll bar arch which is extended by means of a pyrotechnic operation (2).

7. A safety arm for light agricultural vehicles, according to claim 6, **characterised in that** the telescopic arch comprises a device for locking (16) the inner arch.

8. A safety arm for light agricultural vehicles, according to any of claims 6 to 7, **characterised in that** this comprises windows (17) for letting out gases.

9. A safety arm for light agricultural vehicles, according to any of claims 1 to 8, **characterised in that** this also comprises an opening window (26) for access to the device for retaining the rotation of the arm in inactive position.

10. A safety arm for light agricultural vehicles, according to any of the previous claims, **characterised by** comprising an associated device for informing an emergency centre and/or a geographical positioning device.

## Amended claims

### Amended claims under Art. 19.1 PCT

**1.** A safety arm for lightweight agricultural vehicles, with a rotating and telescopically-extending mechanism which is activated when the vehicle reaches a certain inclination, as well as an articulated foot (21), which comprises:
• At least one device for retaining the rotation of the arm in its inactive position;
• An inclinometer (15)
• A firing trigger;
**characterised by** also comprising at least one activating pyrotechnic device (1,3) with a firing device (4) which operates an activation switch;
and also **characterised in that** the set of two safety arms, one at each side of the agricultural vehicle, also comprises a telescopically extendable roll bar arch which is extended by means of a pyrotechnic actuator (2).

**2.** A safety arm for lightweight agricultural vehicles, according to claim 1, **characterised in that** this also comprises a vibration-damping anchorage plate (24) fitted with a rubber gasket.

**3.** A safety arm for lightweight agricultural vehicles, according to any of claims 1 to 2, **characterised in that** the retention of the arm in the retracted position is made up of:
• A locking pawl (23) for the device;
• A firing trigger (5) fitted with an elastic means which keeps this in the position for retaining the locking pawl (23) made up of a rocker articulated on a spindle;
• A lock (8) for the inner telescopic arm (7);
• At least one vibration-damping spring (27).

**4.** A safety arm for lightweight agricultural vehicles, according to any of claims 1 to 3, **characterised in that** the means for retaining the arm in the retracted position comprises a ratchet (9) with a toothed part and a locking device (10) on said toothed part, and with a coupling spindle (11) through a coupling support (12) to the vehicle.

**5.** A safety arm for lightweight agricultural vehicles, according to any of claims 1 to 4, **characterised in that** the firing trigger (5) is fitted with a pyrotechnic activation means (3), with a pulling cable for the release of the catch between the trigger (5) and the pawl of claim 3.

**6.** A safety arm for lightweight agricultural vehicles, according to any of the claims 1 to 5, **characterised in that** the telescopic arch comprises a device for locking (16) the inner arch.

**7.** A safety arm for lightweight agricultural vehicles, according to any of claims 1 to 6, **characterised in that** this comprises windows (17) for letting out gases.

**8.** A safety arm for lightweight agricultural vehicles, according to any of claims 1 to 7, **characterised in that** this also comprises an opening window (26) for access to the device for retaining the rotation of the arm in inactive position.

**9.** A safety arm for lightweight agricultural vehicles, according to any of the previous claims, **characterised by** comprising an associated device for informing an emergency centre and/or a geographical positioning device.
